# EUROPEAN PATENT SPECIFICATION

(11) **EP 3 812 184 B1**
(45) Date of publication and mention of the grant of the patent: **03.04.2024**
(21) Application number: 19205474.0
(22) Date of filing: 25.10.2019
(51) Int. Cl.: B60H 1/24, B60H 1/34

(54) **AIR DIFFUSER ASSEMBLY FOR A VEHICLE**
LUFTVERTEILEREINHEIT FÜR EIN FAHRZEUG
ASSEMBLAGE D'UN DIFFUSEUR D'AIR POUR UN VÉHICULE

(43) Date of publication of application: 28.04.2021
(73) Proprietor: Stellantis Europe S.p.A., 10135 Torino, (TO) (IT)
(72) Inventor: PIOVANO, Andrea Alessandro, 10135 TORINO (IT); PORTA, Fabrizio, 10135 TORINO (IT); QUAGLINO, Massimo, 10135 (IT); SECCARDINI, Riccardo, 10135 TORINO (IT)
(74) Representative: Studio Torta S.p.A.

(56) References cited:
- DE-A1-102015 005 903
- JP-A- 2003 267 047
- JP-A- 2005 212 746
- US-A1- 2017 008 372

## Description

The present invention relates to an air diffuser assembly for a vehicle.

In particular, the present invention relates to an air diffuser assembly of the type that can be installed, for example, on a dashboard of a vehicle to direct an air flow towards the centre of the passenger compartment of the vehicle or towards the passenger and the driver of the vehicle.

For a comfort optimization inside the passenger compartment, it is known to use air diffuser assemblies of the type respectively comprising an air flow inlet opening, a throttle valve arranged in the opening and rotatable about a hinge axis for partializing or closing the inlet passage and a plurality of fixed fins configured to spread the air flow in the passenger compartment.

Although used, due to the fact that they comprise fixed diverter fins, the known solutions of the type defined above do not allow directing the air flow to specific and different areas of the passenger compartment.

The above problem is at least partially solved by arranging adjustable fins in series with the fixed fins.

These solutions, while allowing the driver and/or the passenger a wider adjustment of the orientation of the air flow in the passenger compartment have the inconvenience of being complex, expensive and cumbersome and, at times, even poorly appreciated from an aesthetic point of view. Moreover, the known solutions hinder in some cases and make impossible in others the installation of telematic systems on a vehicle which, by their very nature, would occupy at least part of the space currently available to the air diffusers arranged on the dashboard of the vehicle.

Air diffuser assemblies are also disclosed in DE 10 2015 005903 A1, in JP 2005 212746 A, in US 2017/008372 A1 and in JP 2003 267047 A.

The object of the present invention is to provide an air diffuser assembly for a vehicle, whose constructional features allow varying simply and precisely the air distribution in the passenger compartment.

A further object of the present invention is to provide an air diffuser assembly for a vehicle, which is compact as well as being simple and inexpensive to manufacture, of high reliability and of invariant functional efficiency. According to the present invention, an air diffuser assembly for a vehicle is provided as claimed in claim 1. The invention will now be described with reference to the attached figures showing a non-limiting embodiment, in which:
Figure 1 shows an air diffuser assembly made according to the present invention and mounted on a dashboard of a vehicle, partially shown;
Figure 2 is a section, on an enlarged scale, along the line II-II of Figure 1 and shows the air diffuser assembly arranged in a first functional condition.
Figure 3 is a perspective view, with parts removed for clarity's sake, of the air diffuser assembly of Figure 1.
Figures 4 and 5 show, respectively in section and in perspective view, the air diffuser assembly arranged in a second functional condition;
Figures 6 and 7 show, respectively in section and in perspective view, the air diffuser assembly arranged in a third functional condition; and
Figure 8 is a perspective view, on an enlarged scale, of a detail of Figures 2, 3, 4 and 6.

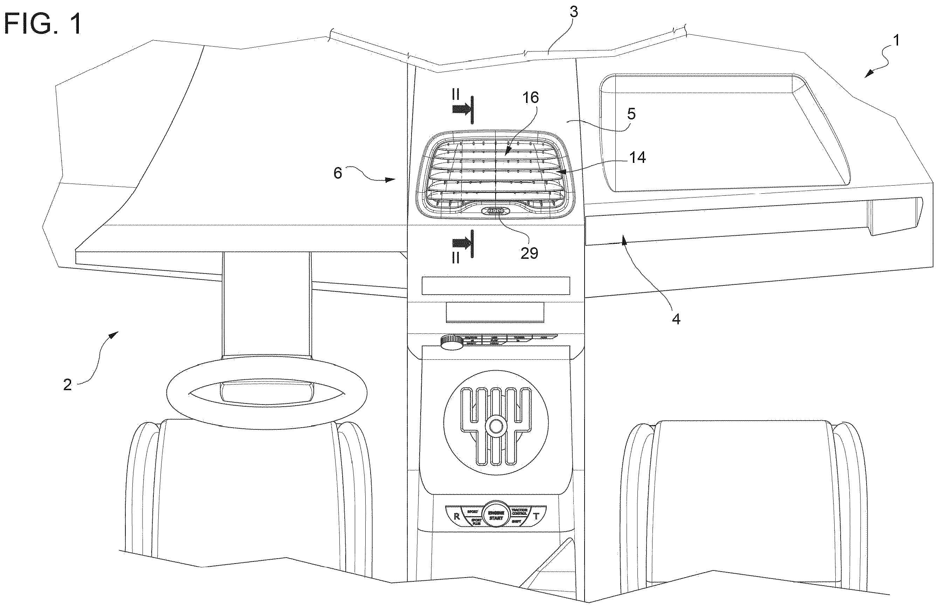

The reference number 1 in Figure 1 indicates as a whole a vehicle having a passenger compartment 2 for the driver and at least one passenger beside the driver, a windshield 3 and a dashboard 4.

The dashboard 4 has a central upper supporting portion 5, to which an air diffuser assembly 6 is coupled. The diffuser assembly 6 is adjustable to direct an air flow entering the diffuser assembly 6 towards the windscreen 3 or towards the driver and the passenger, or towards the centre of the passenger compartment 2, as will be better described below.

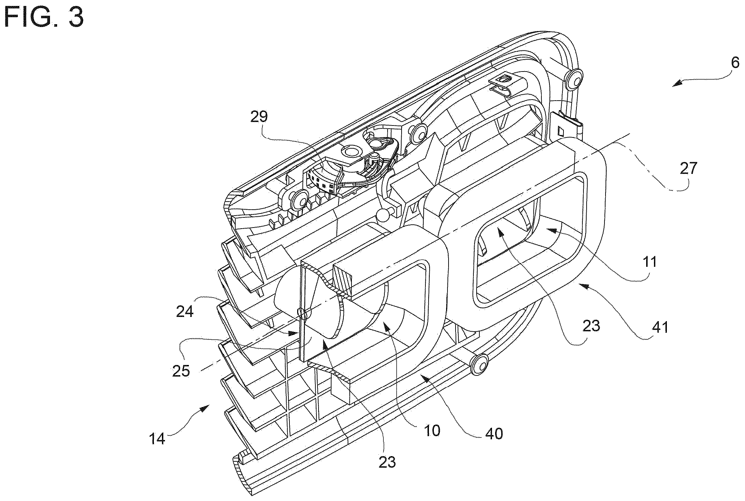

The diffuser assembly 6 comprises a hollow body 7 for conveying the air located below the flat portion 5 and comprising, in turn, a bottom wall 9, through which two ducts 10 and 11 are arranged side by side in the hollow body 7 (Figure 3) for introducing air into the hollow body 7. The hollow body 7 further comprises a side wall 12 defining an upper opening 13 for the outlet of the air from the hollow body 7.

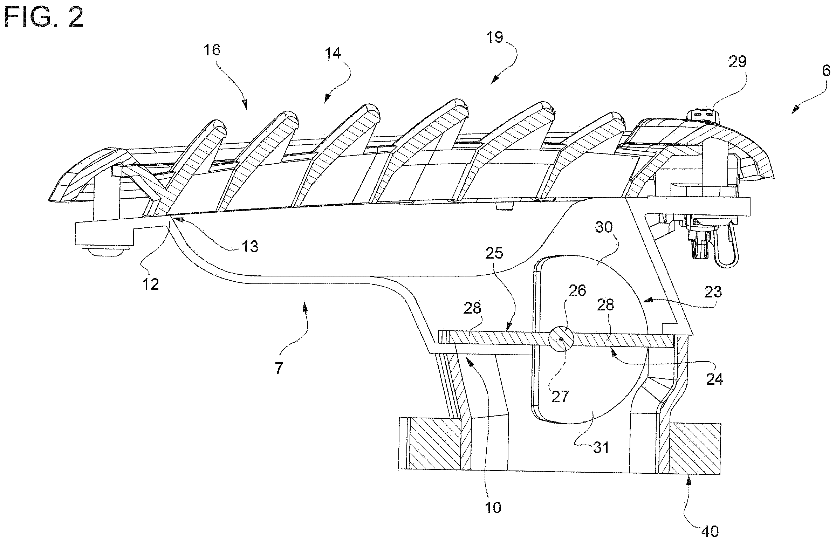

Still with reference to Figure 1, the diffuser assembly 6 further comprises a grid 14 with fixed fins arranged above the flat portion 5 in a position facing the upper outlet opening 13 and stably connected to the hollow body 7 (Figures 2, 4 and 6).

Conveniently, the grid 14 and the hollow body 7 are bodies distinct from each other and made in one piece.

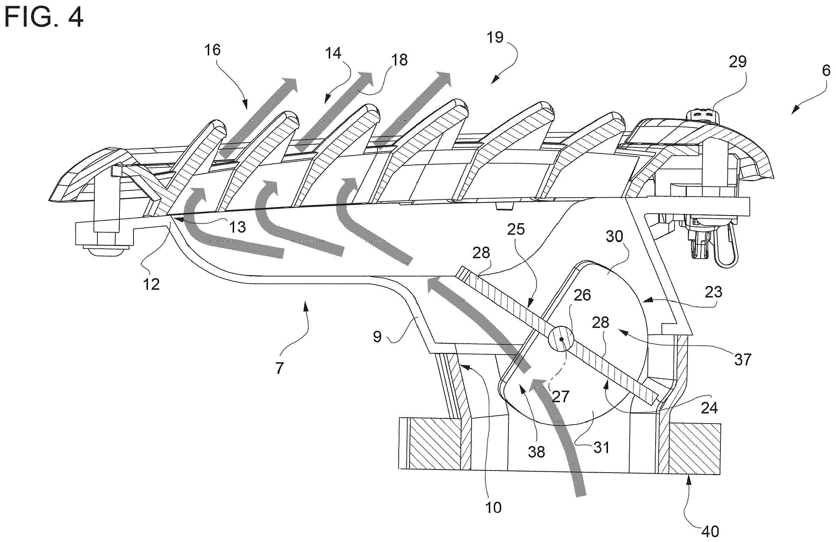

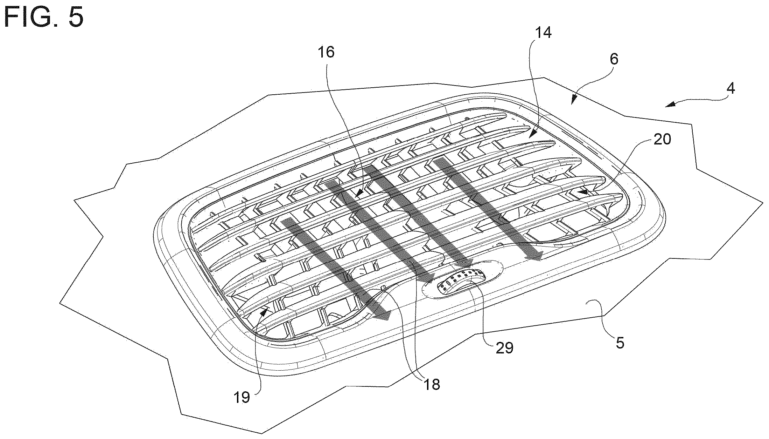

With reference to Figure 5, the grid 14 comprises a set of front fixed flow diverter fins 16 arranged in a front area of the grid 14 to divert at least part of the air leaving the upper outlet opening 13 upwards and/or towards the centre of the passenger compartment 2 in a direction 18 (Figures 4 and 5).

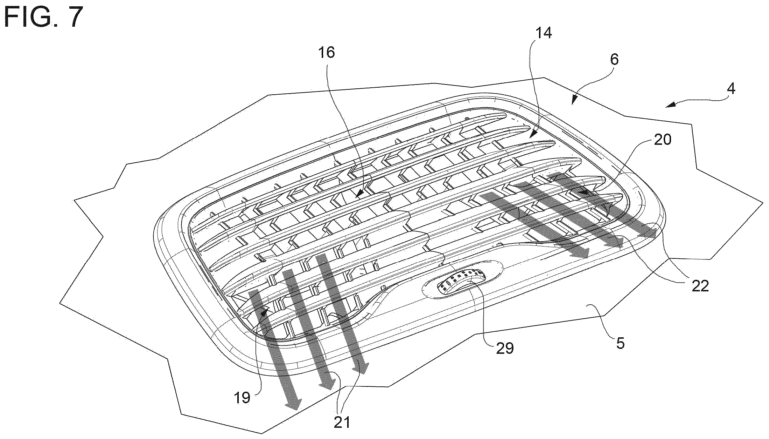

The grid 14 further comprises two sets of rear fixed flow diverter fins, indicated with 19 and 20 and arranged in two rear adjacent areas of the grid 14. The rear fixed fins 19 divert from the rear fixed fins 20 and are configured to divert the air leaving the upper outlet opening 13 towards the driver and, respectively, towards the passenger in two diverting directions 21 and 22, as shown in Figure 7. Here and in the following the terms "front" and "rear" mean positions with reference to the direction of travel of the vehicle 1.

With reference to Figure 3, the diffuser assembly 6 further comprises, for each inlet duct 10, 11, a respective movable flow regulator and diverter indicated with 23 (Figures 2-6).

Each device 23 comprises a respective throttle valve 24 for controlling and orienting the air flowing into the relative duct 10, 11 towards the grid 14. Each throttle valve 24 is coupled to the hollow body 7 between the relative inlet opening 10, 11 and the outlet opening 13.

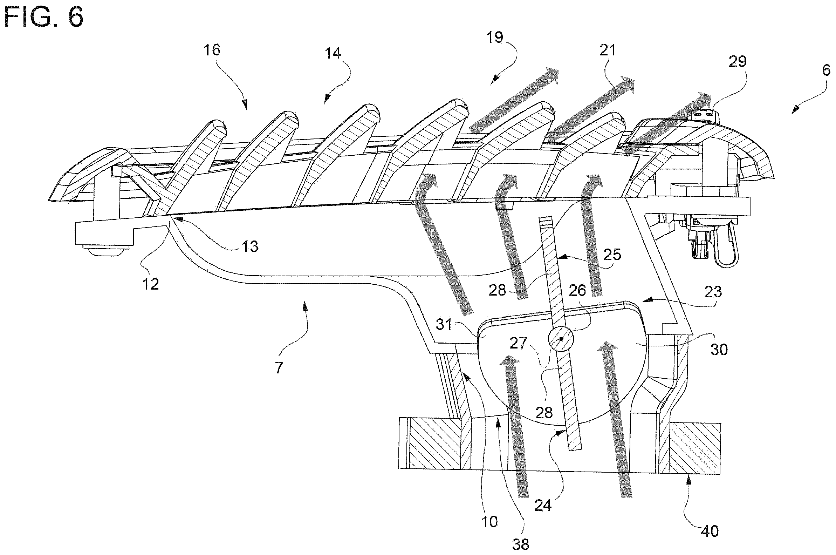

With reference to Figures 2, 4, 6 and 8, each throttle valve 24 comprises a relative flat and blind blade 25 having an intermediate portion 26 pivoted to the relative hollow body 7 to rotate about a respective fixed hinge axis 27 and two opposite side fins 28. Each blade 25 is rotatable about the axis 27 between a closed position of the relative inlet duct 10, 11, shown in Figure 2, and a complete open position of the relative duct 10, 11, shown in Figure 6 under the thrust of a manually operated device, known per se and partially shown, having a manually operated wheel 29 arranged at a rear end of the grid 14 (Figures 1, 5 and 7).

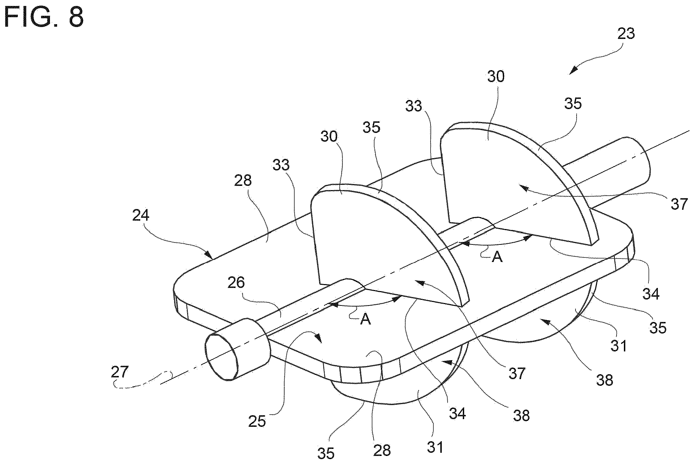

Each blade 25 carries two connected pairs of flow diverter fins, indicated with 30 and 31, which cantileverly extend on the opposite sides of the relative portions 26 and 28 and are stably connected to the relative portions 26, 28 to rotate in unison with the relative blade about the axis 27. With reference to Figure 8, each fin 30, 31 has the shape of a convex/concave semi-circular plate perimetrically delimited by two consecutive sides, mutually orthogonal and of different length, one of which is rectilinear and is indicated with 33 and one of which is convex/concave and is indicated with 34, and by a curved convex side 35 connecting the sections 33 and 34. The longer convex/concave sections 34 are arranged in contact with the blade 25 and straddle the intermediate portion 26 and the hinge axis 27. The fins 30, 31 extend orthogonally with respect to the portions 28 and are tilted with respect to the hinge axis 27 by the same angle A, which in the example described is substantial 109° (Figure 8). The angle A can, however, take values different from the one indicated by way of example depending on the application and the size of the passenger compartment 2. In this way, each blade 25 delimits with the relative fins 30, with the relative inlet duct 10, 11 and with the bottom wall 9 three guide channels 37 (Figures 4, 6 and 8) and with the fins 31, the relative inlet duct 10, 11 and the bottom wall 9 further three channels 38 guiding the incoming air through the relative inlet duct 10, 11 (Figures 4, 6 and 8).

When the blade 25 is in its completely open position (Figure 6), all the relative channels 37 and 38 direct at least part of the air flow coming from the respective inlet duct 10, 11 towards the respective sets of fins 19 which, in turn, deflect it towards the driver and towards the passenger, as shown in Figures 6 and 7. In this case, the blades 25 do not hinder the advancement of the air and contribute to make laminar the air flow towards the fins 19.

When, on the other hand, the blade 25 is arranged in an intermediate position between the respective open and closed positions, shown in Figure 4, the relative channels 37 are practically closed or isolated by the blade 25, which therefore prevents the air from moving towards the relative fins 19, while the relative channels 38 communicate with the relative inlet channel 10, 11 and convey practically the entire incoming air flow towards the relative part of the set of front fins 16, which divert it in the direction 18 towards the centre of the passenger compartment, as shown in Figures 4 and 7.

During the movement of the blade 25 between the aforementioned intermediate position and the complete open position, the relative flow of incoming air is distributed between the fins 16 and the fins 19 and then distributed in different areas of the passenger compartment 2.

From the foregoing it is clear that the described diffuser assembly 6 substantially comprises two air diffusers 40 and 41 (Figure 3) joined together and placed side by side, each comprising a common hollow body, a relative air inlet duct 10, 11, a relative flow regulator and diverter device 23 and a plurality of fixed front fins 16 and rear fins 19 that in the specific case constitute parts of the single common grid 14.

It is clear that the two diffusers 40 and 41 can be made independent of each other by providing for each air diffuser 40, 41 a relative hollow body independent of the other hollow body and a relative grid provided with a set of front fins 16 and with a set of rear fins 19. In this way, the two air diffusers are independent of each other and can therefore be arranged on the dashboard 4 in juxtaposed or spaced apart positions or be arranged in any other part of the passenger compartment 2 to direct an entering air flow along one or the other of two different directions.

Regardless of whether the two air diffusers 40 and 41 are integral with one another or independent of each other, it is clear from the foregoing that the simple association of flow diverter fins 30, 31 to the blade 25 of a common throttle valve 24 and the use of a grid with fixed fins allow only by varying the angular position of the blade 25 of each throttle valve about the relative hinge axis 27 to inhibit the air flow entering the passenger compartment, or to direct the air flow towards the driver and the passenger or, again, to orientate the same air flow in a direction different from the one intercepting the occupants of the vehicle and, in general, towards the centre of the passenger compartment 2.

The use of differently oriented fixed diverter fins combined with the possibility of orienting the incoming air flow towards one or the other of such diverter fins makes, on the one hand, simple, precise and defined the air distribution in the passenger compartment and allows on the other hand manufacturing compact diffusers having a simple and inexpensive manufacture as well as high reliability and functional efficiency.

From the foregoing, it is clear that modifications and variations can be made to the diffuser assembly 6 without thereby leaving the protective scope of the present invention as defined by the appended claims.

In particular, the grid 14 could comprise a different distribution of the fixed fins 16, 19 as well as a different orientation of the fins 16, 19 so that the fins 30, 31 carried by the blade of the throttle valve (s) 24 could be different in number.

Finally, the two diffusers 40 and 41, regardless of the fact that they are independent or that they share parts, can comprise flow regulators and diverters 23, which are constructively different from each other and can be independently adjusted as well as fixed fins 16, 19 oriented in directions such as to direct the incoming air flow in predefined directions different from those indicated.

## Claims

1. Air diffuser assembly (6) for a vehicle (1), the diffuser assembly (6) comprising at least one air diffuser (40;41), in turn comprising:
- a hollow body (7) having an air inlet opening (10;11) and an air outlet opening (13);
- an external diffusion grid (14) for the air leaving the hollow body (7) and provided with a set of fixed flow diverter fins, fixed with respect to said hollow body (7);
- a throttle valve (24) rotatably coupled to said hollow body (7) about a fixed hinge axis (27) to intercept an incoming air flow passing through said inlet opening (10;11); and
- throttle valve adjustment means (29) for rotating the throttle valve (24) about said hinge axis (27) between a closed position, closing said inlet opening (10;11), and an open position, in which the incoming air flow flows from the inlet opening (10;11) to the external diffusion grid (14);
said set of fixed flow diverter fins comprising:
- first fixed flow diverter fins (16) to direct the incoming air flow in a first direction (18), and
- second fixed flow diverter fins (19;20) to direct the incoming air flow in a second direction (21;22), different from said first direction (18);
said throttle valve (24) comprising a relative flat and blind blade (25) having:
a) an intermediate portion (26) pivoted to the hollow body (7) to rotate in opposite directions about said hinge axis (27) under the thrust of said adjustment means (29), and
b) two opposite side fins (28);
the air diffuser assembly (6) further comprising flow diverter means movable with said throttle valve (24) to direct at least part of said incoming air flow selectively towards said first fixed flow diverter fins (16) and said second fixed flow diverter fins (19;20);
said blade (25) and said flow diverter means delimiting at least one channel (38) guiding air towards said first fixed flow diverter fins (16) when the blade (25) is arranged in an intermediate position between said open and closed positions;
said flow diverter means comprising flow diverter fins (30,31) permanently connected to said blade (25) and comprising flat portions inclined with respect to said hinge axis (27);
**characterized in that** each flow diverter fin (30, 31) of the flow diverter means has the shape of a convex/concave semi-circular plate perimetrically delimited by
• two consecutive sides (33,34), mutually orthogonal and of different length, one (33) of said two consecutive sides (33, 34) being rectilinear, the other (34) of said two consecutive sides (33, 34) being convex/concave, and
• curved convex side (35) connecting said two consecutive side (33,34) to each other;
wherein the longer convex/concave sides (34) are arranged in contact with the blade (25) and straddle said intermediate portion (26) and said hinge axis (27).

2. The air diffuser assembly (6) according to claim 1, **characterized in that** said flow diverter means are stably connected to said throttle valve (24).

3. The air diffuser assembly (6) according to claim 1, **characterized in that** said flow diverter fins (30,31) extend on opposite sides of said blade (25).

4. The air diffuser assembly (6) according to any one of the preceding claims, **characterized in that** said flow diverter means comprise two pairs of said flow diverter fins (30,31); said flow diverter fins (30,31) being mutually parallel and extending in opposite directions with respect to said blade (25).

## Patentansprüche

1. Luftverteilerbaugruppe (6) für ein Fahrzeug (1), wobei die Verteilerbaugruppe (6) zumindest einen Luftverteiler (40; 41) umfasst, der wiederum Folgendes umfasst:
- einen Hohlkörper (7) mit einer Lufteinlassöffnung (10; 11) und einer Luftauslassöffnung (13);
- ein äußeres Verteilungsgitter (14) für die Luft, die den Hohlkörper (7) verlässt, und versehen mit einem Satz starrer Strömungsumlenkrippen, die bezüglich des Hohlkörpers (7) angebracht sind;
- eine Drosselklappe (24), die um eine starre Scharnierachse (27) drehbar zum Abfangen einer ankommenden Luftströmung, welche durch die Einlassöffnung (10; 11) hindurchtritt, an den Hohlkörper (7) gekuppelt ist,
- Drosselklappeneinstellmittel (29) zum Drehen der Drosselklappe (24) um die Scharnierachse (27) zwischen einer geschlossenen Position, die die Einlassöffnung (10; 11) schließt, und einer offenen Position, in der die ankommende Luftströmung aus der Einlassöffnung (10; 11) zum äußeren Verteilungsgitter (14) strömt;
wobei der Satz starrer Strömungsumlenkrippen Folgendes umfasst:
- erste starre Strömungsumlenkrippen (16) zum Leiten der ankommenden Luftströmung in eine erste Richtung (18), und
- zweite starre Strömungsumlenkrippen (19; 20) zum Leiten der ankommenden Luftströmung in eine zweite Richtung (21; 22), die von der ersten Richtung (18) abweicht;
wobei die Drosselklappe (24) ein verhältnismäßig flaches Blendenblatt (25) umfasst, aufweisend:
a) einen zwischenliegenden Abschnitt (26), der schwenkbar am Hohlkörper (7) zum Drehen in entgegengesetzte Richtungen um die Scharnierachse (27) unter dem Schub des Einstellmittels (29) angebracht ist, und
b) zwei gegenüberliegende Seitenrippen (28);
wobei die Luftverteilerbaugruppe (6) ferner Strömungsumlenkmittel umfasst, die mit der Drosselklappe (24) zum Leiten von zumindest einem Teil der ankommenden Luftströmung wahlweise zu den ersten starren Strömungsumlenkrippen (16) und den zweiten starren Strömungsumlenkrippen (19; 20) hin beweglich sind;
wobei das Blatt (25) und die Strömungsumlenkmittel zumindest einen Kanal (38) begrenzen, der Luft zu den ersten starren Strömungsumlenkrippen (16) führt, wenn das Blatt (25) in einer Zwischenposition zwischen der offenen und geschlossenen Position angeordnet ist,
wobei die Strömungsumlenkmittel Strömungsumlenkrippen (30, 31) umfassen, die dauerhaft mit dem Blatt (25) verbunden sind und flache Abschnitte umfassen, welche bezüglich der Scharnierachse (27) geneigt sind;
**dadurch gekennzeichnet, dass** jede Strömungsumlenkrippe (30, 31) der Strömungsumlenkmittel die Form einer konvex-/konkaven halbkreisförmigen Platte aufweist, die umfänglich begrenzt ist durch:
·) zwei aufeinander folgende Seiten (33, 34), die wechselseitig senkrecht stehen und eine unterschiedliche Länge aufweisen, wobei eine (33) der zwei aufeinander folgenden Seiten (33, 34) geradlinig ist, wobei die andere (34) der zwei aufeinander folgenden Seiten (33, 34) konvex/konkav ist, und
·) eine gekrümmte konvexe Seite (35), die die zwei aufeinander folgenden Seiten (33, 34) miteinander verbindet;
wobei die längeren konvex/konkaven Seiten (34) in Kontakt mit dem Blatt (25) angeordnet sind und den zwischenliegenden Abschnitt (26) und die Scharnierachse (27) überspreizen.

2. Luftverteilerbaugruppe (6) nach Anspruch 1, **dadurch gekennzeichnet, dass** die Strömungsumlenkmittel stabil mit dem Drosselventil (24) verbunden sind.

3. Luftverteilerbaugruppe (6) nach Anspruch 1, **dadurch gekennzeichnet, dass** die Strömungsumlenkrippen (30, 31) auf gegenüberliegenden Seiten des Blatts (25) verlaufen.

4. Luftverteilerbaugruppe (6) nach einem der vorhergehenden Ansprüche, **dadurch gekennzeichnet, dass** die Strömungsumlenkmittel zwei Paare der Strömungsumlenkrippen (30, 31) umfassen, wobei die Strömungsumlenkrippen (30, 31) wechselseitig parallel sind und in entgegengesetzten Richtungen bezüglich des Blatts (25) verlaufen.

## Revendications

1. Ensemble de diffuseur d'air (6) pour un véhicule (1), l'ensemble de diffuseur (6) comprenant au moins un diffuseur d'air (40 ; 41), comprenant à son tour :
un corps creux (7) ayant une ouverture d'entrée d'air (10 ; 11) et une ouverture de sortie d'air (13) ;
une grille de diffusion externe (14) pour l'air sortant du corps creux (7) et prévue avec un ensemble d'ailettes de déviateur de débit fixes, fixes par rapport audit corps creux (7) ;
un papillon des gaz (24) couplé, de manière rotative, audit corps creux (7) autour d'un axe de charnière fixe (27) pour intercepter un débit d'air entrant passant par ladite ouverture d'entrée (10 ; 11) ; et
des moyens de réglage de papillon des gaz (29) pour faire tourner le papillon des gaz (24) autour dudit axe de charnière (27) entre une position fermée, fermant ladite ouverture d'entrée (10 ; 11), et une position ouverte, dans laquelle le débit d'air entrant s'écoule de l'ouverture d'entrée (10 ; 11) à la grille de diffusion externe (14) ; ledit ensemble d'ailettes de déviation de débit fixes comprenant :
des premières ailettes de déviation de débit fixes (16) pour diriger le débit d'air entrant dans une première direction (18), et
des secondes ailettes de déviation de débit fixes (19 ; 20) pour diriger le débit d'air entrant dans une seconde direction (21; 22), différente de ladite première direction (18) ;
ledit papillon des gaz (24) comprenant une pale plate et borgne (25) relative ayant :
a) une partie intermédiaire (26) pivotée vers le corps creux (7) pour tourner dans des directions opposées autour dudit axe de charnière (27) sous la poussée desdits moyens de réglage (29), et
b) deux ailettes latérales (28) opposées ;
l'ensemble de diffuseur d'air (6) comprenant en outre des moyens de déviation de débit mobiles avec ledit papillon des gaz (24) afin de diriger au moins une partie dudit débit d'air entrant sélectivement vers lesdites premières ailettes de déviation de débit fixes (16) et lesdites secondes ailettes de déviation de débit fixes (19 ; 20) ;
ladite pale (25) et lesdits moyens de déviation de débit délimitant au moins un canal (38) guidant l'air vers lesdites premières ailettes de déviation de débit fixes (16) lorsque la pale (25) est agencée dans une position intermédiaire entre lesdites positions ouverte et fermée ;
lesdits moyens de déviation de débit comprenant deux ailettes de déviation de débit (30, 31) raccordées, de manière permanente, à ladite pale (25) et comprenant des parties plates inclinées par rapport audit axe de charnière (27) ;
**caractérisé en ce que** chaque ailette de déviation de débit (30, 31) des moyens de déviation de débit a la forme d'une plaque semi-circulaire convexe/concave délimitée, de manière périmétrale, par :
deux côtés consécutifs (33, 34), mutuellement orthogonaux et de différentes longueurs, l'un (33) desdits deux côtés consécutifs (33, 34) étant rectiligne, l'autre (34) desdits deux côtés consécutifs (33, 34) étant convexe/concave, et
un côté courbé convexe (35) raccordant lesdits deux côtés consécutifs (33, 34) entre eux ;
dans lequel les côtés convexes/concaves plus longs (34) sont agencés en contact avec la pale (25) et enjambent ladite partie intermédiaire (26) et ledit axe de charnière (27).

2. Ensemble de diffuseur d'air (6) selon la revendication 1, **caractérisé en ce que** lesdits moyens de déviation de débit sont raccordés, de manière stable, audit papillon des gaz (24).

3. Ensemble de diffuseur d'air (6) selon la revendication 1, **caractérisé en ce que** lesdites ailettes de déviation de débit (30, 31) s'étendent sur les côtés opposés de ladite pale (25).

4. Ensemble de diffuseur d'air (6) selon l'une quelconque des revendications précédentes, **caractérisé en ce que** lesdits moyens de déviation de débit comprennent deux paires d'ailettes de déviation de débit (30, 31) ; lesdites ailettes de déviation de débit (30, 31) étant mutuellement parallèles et s'étendant dans des directions opposées par rapport à ladite pale (25).
